**Europäisches Patentamt**

**European Patent Office**

**Office européen des brevets**

(11) Veröffentlichungsnummer: **0 211 212 B1**

# EUROPÄISCHE PATENTSCHRIFT

(45) Veröffentlichungstag der Patentschrift: **28.08.91**

(51) Int. Cl.⁵: **G01D 1/00**, G01D 21/00, G07C 3/00

(21) Anmeldenummer: **86108594.2**

(22) Anmeldetag: **24.06.86**

(54) Verfahren und Vorrichtung zur Ermittlung und Auswertung von Maschinenzustandsdaten.

(30) Priorität: **28.06.85 DE 3523289**

(43) Veröffentlichungstag der Anmeldung:
**25.02.87 Patentblatt 87/09**

(45) Bekanntmachung des Hinweises auf die
Patenterteilung:
**28.08.91 Patentblatt 91/35**

(84) Benannte Vertragsstaaten:
**AT BE CH DE FR GB IT LI LU NL SE**

(56) Entgegenhaltungen:
EP-A- 0 023 879
GB-A- 1 233 365
GB-A- 1 286 802
GB-A- 2 018 069
GB-A- 2 072 906

TECHNISCHE RUNDSCHAU, Band 68, Nr. 18,
27. April 1976, Seite 13: "Wälzlager überwachen"

(73) Patentinhaber: **PRÜFTECHNIK DIETER BUSCH
+ PARTNER GmbH & CO
Oskar-Messter-Strasse 19-21
W-8045 Ismaning(DE)**

(72) Erfinder: **Busch, Dieter, Dipl.-Ing.
Am Isarberg 1
W-8045 Ismaning(DE)**

(74) Vertreter: **Eitle, Werner, Dipl.-Ing. et al
Hoffmann, Eitle & Partner Patentanwälte Arabellastrasse 4
W-8000 München 81(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur Ermittlung und Auswertung von Zustandsgrößen an mit Meßstellen versehenen Maschinen sowie eine Vorrichtung zur Durchführung des Verfahrens, wobei eine Meßgrößen-Sonde an die Meßstellen angesetzt wird und wobei die abgetasteten Meßgrößen als Daten in eine Auswerteschaltung mit Speicher übertragen und dort verarbeitet werden, wobei in einem weiteren Meßschritt mittels einer Meßstellen-Kennungs-Abtastsonde eine an jeder Meßstelle vorgesehenen Meßstellen-Kennung abgetastet wird und wobei die abgetasteten Kennungen zur Adaptierung der Auswerteschaltung an die betreffende Meßstelle der Maschine auf den Speicher der Auswerteschaltung übertragen werden.

Die Erfindung betrifft weiter ein Meßgerät zur Durchführung des genannten Verfahrens gemäß Patentanspruch 5 und ein Meßgrößen-Übertragungsteil gemäß Patentanspruch 22

Bei rotierenden Maschinensätzen, wie zum Beispiel Pumpen, Generatoren, Lüftern, Turbosätzen, Kompressoren und anderen, werden in mehr oder weniger regelmäßigen Zeitabständen Untersuchungen des Laufverhaltens vorgenommen und zwar hinsichtlich eventueller Veränderungen. Diese Veränderungen können zum Beispiel zu Schwingungsverhalten führen und können auf Stoßimpulsen, bzw.

Schallemissionsverhalten der Lager (Unwuchten) und auf Temperaturveränderungen am Maschinengehäuse und an den Lagern beruhen. Eine Überwachung des Laufverhaltens solcher rotierender Maschinensätze ist von großer Bedeutung für die Sicherheit und Wartung und damit für die Lebensdauer solcher Maschinen.

Im allgemeinen werden Messungen an den Maschinen manuell durchgeführt. In der Regel werden die Meßstellen dieser Maschinen durch entsprechendes Wartungspersonal mit Hilfe von Prüf- und Meßgeräten manuell durchgeführt. Die ermittelten Meßdaten einer Meßstelle werden auf ein entsprechendes vorgedrucktes Formular übertragen. Für eine Schwingungsmessung ist zum Beispiel bei einem entsprechenden Maschinenaggregat eine Meßfolge von zwölf Messungen notwendig. So ist es zum Beispiel notwendig, auf der Antriebsseite und Betriebsseite eines Motors sowie auf der Antriebsseite und Betriebsseite einer mit dem Motor verbundenen Pumpe jeweils drei Messungen in X-Achsenrichtung, in Y-Achsenrichtung und in Z-Achsenrichtung durchzuführen. Jedes Meßergebnis muß aufgezeichnet werden. Auch ist es darüber hinaus notwendig, bereits am Ort selbst eine Bewertung der Meßergebnisse vorzunehmen, um zum Beispiel plötzliche Veränderungen an einer Meßstelle bewerten zu können, falls beispielsweise Sofortmaßnahmen notwendig sind. Dies setzt nun voraus, daß das Wartungspersonal entsprechende qualifizierte Fachkenntnisse hat, um solche Veränderungen an den Meßstellen richtig zu bewerten. Zur Feststellung von Lagerschäden ist ein Stoßimpuls-Meßgerät bekannt, mit dessen Hilfe Lagerschäden von mit rotierenden Maschinensätzen versehenen Maschinen festgestellt werden können. Solche Lagerschäden gehören zu den häufigsten Ursachen von Maschinenausfällen. Folgeschäden, Betriebsstörungen und Produktionsverluste bedeuten einen nicht zu vernachlässigenden Kostenfaktor. Dieses bekannte Stoßimpulsmeßgerät empfängt mechanische Stöße, welche als kurzzeitige Druckwellen in Wälzlagern entstehen. Solche Druckwellen werden entsprechend ausgewertet. Ein erhöhter Stoßimpulswert zeigt einen Lagerfehler an. Es kann aber auch ein falscher Einbau, eine mangelnde Schmierung oder ein anderer Defekt vorliegen, der durch die erhöhten Stoßimpulswerte signalisiert wird. Vor der Durchführung einer Messung an einer Meßstelle muß der zu untersuchende Wellendurchmesser sowie die Drehzahl auf einer Geräteskala eingestellt werden. Diese von Hand eingegebenen Sollwerte dienen als Referenzpegel. Wird nun der Referenzpegel vom gemessenen Istwert überschritten, so kann dies beispielsweise durch eine optische Anzeige oder aber durch Tonsignale signalisiert werden.

Eine solche akustische Stoßimpulssonde wurde bei einem weiteren bekannten Analysiergerät weiter entwickelt. Dieses bekannte Analysiersonden-Meßgerät reagiert ebenfalls auf von Lagern ausgehende Stoßimpulse. Das bekannte Gerät enthält einen Mikroprozessor und eine Anzeige. Mit Hilfe des Analysiergerätes wird zum Beispiel der Schmierungsgrad sowie die Dicke eines Ölfilmes zwischen den belasteten Lagerflächen ermittelt und digital in Form von Zwei-Kode-Ziffern gezeigt. Die beiden Kode-Ziffern beinhalten den Zustandskode und die Schmierzahl. Um dem Mikroprozessor eine Bewertungs- und Vergleichsmessung zu ermöglichen, wurde zuvor in einem Speicher eine Vielzahl von empirisch ermittelten Datenwerten eingegeben und als Referenzwert abgespeichert. Vor der Durchführung einer Messung muß die Bedienungs- oder Wartungsperson der Maschine die Größe, den Typ und die Drehzahl des zu messenden Lagers in Form von Zwei-Kode-Ziffern in das Meßgerät eingeben. Für die Eingabe dieser lagerspezifischen Daten einer Maschine ist es notwendig, daß die Bedienungsperson diese Daten kennt und sie dann anschließend über eine entsprechende Tastatur eingibt. Hierzu benötigt die Bedienungsperson entsprechende Formulare und Listen als Vorlage für diese meßspezifischen Meßstellendaten.

Ein solches Eingabeverfahren vor der Durchführung der eigentlichen Messung ist zeitaufwendig und birgt in sich die Gefahr, daß unbeabsichtigt falsche Kennungsdaten für die Meßstelle eingegeben werden mit der Folgewirkung, daß ein falsches Vergleichsergebnis zwischen Ist- und Sollwert erzielt wird. In der Regel enthalten solche Meßformulare eine vorgegebene Reihenfolge der zu überprüfenden Meßstellen. Um rationell arbeiten zu können, ist es für die Bedienungsperson notwendig, sich in der Reihenfolge der Messungen an diese auf dem Formular festgelegte Reihenfolge zu halten. Ein Abweichen von dieser Reihenfolge bedeutet einen zusätzlichen Zeitaufwand und erhöht die Fehlerquote hinsichtlich der Eingabe der Kennungsdaten. Aus diesem Grunde ist es nachteilig, daß die Bedienungsperson für jede Meßstelle erst die Zuordnung zum Sollwert schaffen muß. Auch ist es nachteilig, daß neben dem Meßgerät ein Werks- bzw. Installationsplan mitgenommen werden muß.

In der älteren europäischen Patentanmeldung No. 85 103 023.9 wurde zur Behebung der den bekannten Verfahren und Vorrichtungen anhaftenden Nachteile das eingangs genannte Verfahren sowie die zugehörige Vorrichtung zur Durchführung des Verfahrens vorgeschlagen.

Gemäß dem vorgeschlagenen Verfahren erfolgt die Abtastung der Kennungen in einem ersten Ablesevorgang, während die Abtastung der Meßgrößen in einem hiervon getrennten Abtastvorgang durchgeführt wird.

Aus der EP-A-00 23 879 ist eine Überwachungseinrichtung für eine Gasturbine bekannt. Das Überwachungssystem ist mittels Lichtleiter ständig mit der Gasturbine verbunden, um diese während ihrer gesamten Lebensdauer zu überwachen. Von der Lichtleiterkabelanschlußstelle der Gasturbine führen Lichtleiterverbindungen zu Identifizierungseinheiten einzelner Module der Gasturbine. Über diese ständige Lichtleiterkabelverbindung sendet die Überwachungseinrichtung ständig Lichtimpulse zur Gasturbine und erhält von dieser Identifizierungsdaten und Information über den Zustand der Module zurück. Eine solche komplexe Überwachungseinrichtung eignet sich nicht für einfachere Zwecke, in denen eine Bedienungsperson eine Meßeinheit an eine Meßstelle ansetzt und hierbei nacheinander mehrere Meßstellen zu bedienen hat.

Der Erfindung liegt daher die Aufgabe zugrunde, ein Verfahren sowie eine Vorrichtung zur Durchführung des Verfahrens der eingangs genannten Art zu schaffen, mit dessen Hilfe es der jeweils die Vorrichtung an einer Meßstelle ansetzenden Bedienungsperson ohne weiteres möglich sein soll, die zu untersuchenden Meßstellen automatisch in Bezug auf ihre Kennungen abzutasten, ohne daß hierbei das besondere Augenmerk auf einen Kennungsträger gelegt werden muß.

Diese Aufgabe wird erfindungsgemäß einerseits durch die Merkmale des Verfahrensanspruchs 1 und andererseits durch die Merkmale des Vorrichtungsanspruchs 5 gelöst.

Hieraus ergibt sich der Vorteil, daß im Zuge einer einzigen Ansetzbewegung der Meßeinheit automatisch sowohl die Abtastung der Kennungen als auch danach die Abtastung der Meßgrößen erfolgt, so daß automatisch Datenpakete erzeugt werden, die aus Daten der Kennungen und der Meßgrößen bestehen. Der Benutzer des Meßgerätes braucht daher kein besonderes Augenmerk mehr auf evtl. Kennungsträger zu legen. Es ist nämlich durchaus möglich, daß es sonst bei im Bereich von Meßstellen vorgesehenen Kennungsträgern vorkommen kann, daß insbesondere bei vielen Meßstellen die Bedienungsperson nicht mehr genau weiß, ob sie bereits einen Kennungsträger abgetastet hat oder nicht, oder die Abtastung eines Kennungsträgers vergessen hat.

Diese Unsicherheit wird durch das erfindungsgemäße Verfahren sowie durch die erfindungsgemäße Vorrichtung beseitigt.

Gemäß weiterer Ausbildung werden mittels der Meßstellen-Kennungs-Abtastsonde automatisch optische oder kapazitive oder magnetische oder induktive oder mechanische Kennungen abgetastet.

Desweiteren erfolgt die Verarbeitung der Meßgrößen-Daten und der Kennungsdaten der Meßschritte in einem tragbaren Meßgerät. Es ist aber auch möglich, daß eine Weiterverarbeitung und Abspeicherung der Meßgrößen-Daten und Kennungsdaten in einer zentralen Verarbeitungsvorrichtung, insbesondere in der zentralen Datenverarbeitungsanlage, erfolgt.

Das Meßgerät zur Durchführung des Verfahrens, das mit einer Meßgrößen-Sonde versehen ist, welche einen Meßgrößen-Empfänger und eine Auswerteschaltung mit Speicher zur Aufnahme und Auswertung der von der betreffenden Meßstelle übertragenen Meßgrößen enthält, und das mit einer Meßstellenkennungs-Abtastsonde mit einer Abtasteinheit zum Abtasten von Meßstellenkennungen versehen ist, wobei der Speicher meßstellen-spezifische Speicherplätze aufweist, die durch die entsprechenden Kennungsdaten der Meßstelle aktiviert werden und wobei die Meßgrößen-Sonde und die Meßstellenkennungs-Sonde in einem gemeinsamen Gehäuse untergebracht sind, ist derart ausgestaltet, daß im gemeinsamen Gehäuse ein zum maschinenseitigen Kopfende der Meßeinheit hin geöffneter Meßraum für ein maschinenseitiges Meßgrößen-Übertragungsteil vorgesehen ist, das außerdem Träger der meßstellen-spezifischen Kennungen ist. Die Meßstellenkennungs-Abtasteinheit ist in Ansetzrichtung der Meßeinheit gesehen seitlich im Meßraum angeordnet und ist außerdem an den Kennungen des Meßstellenkennungs-Trägers entlang bewegbar.

Hieraus ergibt sich der Vorteil, daß aufgrund der Relativbewegung zwischen der Meßstellenkennungs-Abtasteinheit und den Kennungen des Kennungsträgers automatisch Daten für Kennungen geliefert werden, die die jeweilige Meßstelle charakterisieren. Hierbei ist es vorteilhaft, daß ein zum Kopfende der Meßeinheit hin geöffneter Meßraum vorhanden ist, welcher sowohl den Meßgrößen-Empfänger als auch die Kennungs-Abtasteinheit enthält, so daß beim Ansetzen des Kopfes der Meßeinheit des Meßgerätes auf den Meßgrößen-Übertragungsteil der Maschine automatisch ein Ablesen der Meßgrößen und der Kennungen möglich ist. Die Ausbildung des Kopfes der Meßeinheit mit Meßraum erlaubt eine einzige Ansetzbewegung sowohl für die Kennungsdatenerzeugung als auch für die Meßgrößen-Übertragung.

In vorteilhafter Weise ist der Meßgrößen-Empfänger am Boden des Meßraumes angeordnet, wobei die Meßstellenkennungs-Abtasteinheit am seitlichen Meßkopfende des Meßraumes fest angeordnet ist, so daß sie beim Ansetzen des Meßkopfes auf das Meßgrößen-Übertragungsteil an den Kennungen entlang bewegt werden.

Gemäß einer anderen Ausführungsform ist die Meßstellenkennungs-Abtasteinheit im Meßraum beweglich gelagert und durch ein Antriebsmittel bei auf das Meßgrößen-Übertragungsteil aufgesetzten Meßkopf an den Kennungen entlang bewegbar. Hieraus ergibt sich der Vorteil, daß eine Abtastung der Kennungen mit konstanter Abtastgeschwindigkeit möglich ist, da die Abtastsonde motorisch mit konstanter Geschwindigkeit an den Kennungen entlang bewegt wird.

Gemäß weiterer Ausbildung ist das Ende des Meßkopfes mit Befestigungsteilen versehen, die bei auf das Meßgrößen-Übertragungsteil aufgesetzten Meßkopf diesen am Meßgrößen-Übertragungsteil fixieren bzw. sichern.

Die Befestigungsteile sind federnde klinkenartig ausgebildete Hebel, die im aufgesetzten Zustand des Meßkopfes automatisch einen Halteteil des Meßgrößen-Übertragungsteiles umgreifen.

Zweckmäßigerweise ist die Kennungs-Abtastsonde als digital arbeitende optische Sonde mit einer Strahlungsquelle, einem strahlungsempfindlichen Empfänger und einer digitalen Signalverarbeitungsschaltung zum Lesen und Auswerten von optischen Kennungen ausgebildet.

Gemäß einer anderen Möglichkeit ist die Meßstellenkennungs-Abtastsonde als Kapazitätssonde zum Lesen von kapazitiven Kennungen ausgebildet.

Gemäß einer weiteren Möglichkeit ist die Meßstellenkennungs-Abtastsonde als Magnetlesekopf zum Lesen von magnetischen Kennungen ausgebildet.

Gemäß einer anderen Ausgestaltung ist die Meßstellenkennungs-Abtastsonde als Induktionslesekopf zum Lesen von induktiven Kennungen ausgebildet.

Auch ist es möglich, daß die Meßstellenkennungs-Abtastsonde als Abtaster mit einer Impulsgeberschaltung zum Abtasten von mechanischen oder elektrischen Kodierungen ausgebildet ist.

Zweckmäßigerweise ist der Meßdatenempfänger im Meßraum in Ansetzrichtung des Meßkopfes gesehen federnd gelagert. Hieraus ergibt sich der Vorteil, daß nicht nur eine sichere Fixierung der Meßeinheit am Meßgrößen-Übertragungsteil möglich ist, sondern darüber hinaus eine bündige druckbelastete Verbindung zwischen dem Meßgrößen-Empfänger und dem Meßgrößen-Geber geschaffen ist.

Gemäß weiterer Ausgestaltung ist ein Betriebsschalter vorgesehen, durch den bei aufgesetztem Meßkopf sowohl die Meßgrößen-Sonde als auch die Meßstellenkennungs Sonde betriebswirksam schaltbar ist.

Auch ist es möglich, daß der Betriebsschalter als Druck- oder Teleskopschalter ausgebildet ist und durch teleskopartiges Ineinanderschieben zweier Gehäuseteile der Meßeinheit betätigbar ist.

Gemäß weiterer Ausgestaltung weist die Meßgrößen-Sonde einen akustischen Signalempfänger, insbesondere einen Stoßsignalempfänger sowie einen A/D-Wandler auf.

Die erfaßten Kennungen und Meßgrößen werden zunächst als Daten in einem Mikrocomputer mit Speicher in einem tragbaren Meßgerät erfaßt, welches mit einem Anschluß versehen ist, über den die Übertragung der Kennungs- und Meßdaten in eine zentrale Datenverarbeitungsanlage möglich ist.

Der Meßstellenkennungs-Träger zur Durchführung des Verfahrens ist Bestandteil eines Adapters, welcher mit einem Meßempfängerteil zur Einbringung in eine Meßstellenöffnung versehen ist und welcher außerdem am anderen Ende mit einem Signalgeberteil für die Erzeugung von den Meßgrößen entsprechenden Daten versehen ist. Außerdem ist der Meßstellenkennungs-Träger des Adapters als optischer oder kapazitiver oder induktiver oder magnetischer oder mechanischer Träger von digitalen Meßstellen-Kennungen in Form von strich- oder balken-kodierten Kennungen oder von kapazitiven Kennungen oder von induktiven Kennungen oder von magnetischen Kennungen oder aber von Impulskennungen ausgebildet. Es ist aber auch denkbar, daß der Meßstellenkennungs-Träger als magnetischer Speicher oder als lesbarer Festwertspeicher ausgebildet ist.

Mit Hilfe der automatischen Kennungs-Ablesung in Verbindung mit der automatischen Meßgrößen-Ablesung erfolgt die Adaptierung und Einstellung der Auswerteschaltung an die betreffende Meßstelle. Dies bedeutet im einzelnen, daß zum Beispiel die Gerätenummer sowie die für die Meßstelle charakteristischen Werte abgelesen und in dem Speicher der dezentralen und/oder zentralen Auswerteschaltung aktiviert werden.

Die darauffolgende Messung der Meßgrößen der Meßstelle stellt dann gewissermaßen die Istwertmessung dar, welche auf die Sollwerteinstellung folgt. Mit Hilfe dieser automatischen Kennungs-Abtastung jeder Meßstelle ergeben sich die weiteren Vorteile, daß nämlich der Zeitaufwand für die Messung und Festhaltung der Meßwerte für jede Meßwertstelle erheblich verringert wird bei gleichzeitiger Verringerung der Fehlerquote in der Zuordnung zwischen den Meßwerten und den Kennungen. Bedienungsperson-bedingte Fehler werden somit automatisch ausgeschaltet. Dadurch, daß die Ablesung der Kennungen automatisch erfolgt, gibt es keine Eingabe oder Übertragungsfehler durch die Bedienungsperson.

Ein weiterer Vorteil ist darin zu sehen, daß die Qualifikation der Bedienungsperson erheblich verringert werden kann. Die Zuordnung der einzelnen Meßwerte der Meßwertstellen an einer Maschine oder an verschiedenen Maschinen zu den einzelnen Meßstellen und Maschinen erfolgt innerhalb kürzester Zeit, da mit Hilfe der Meßstellenkennungs-Sonde die meßstellen-bedingten Meßgrößen in entsprechend aufbereiteter digitaler Form als Daten insbesondere als maschinenlesbare Datenfolge der Auswerteschaltung zur Verfügung stehen. Somit können die genannten Daten in eine zentrale Datenverarbeitungsanlage übertragen werden und

dort abgespeichert werden. Jede neue Messung bringt dann die betreffenden Daten auf den neuesten Stand (up-dating).

Zur Abtastung der Meßstellen-Kennungen wird der Mikroprozessor des Mikrocomputers herangezogen, und zwar zum Abrufen von für die Meßstelle im Schreib-und Lesespeicher abgespeicherten Sollwertdaten. Diese werden in vorteilhafter Weise in einer Anzeigeeinrichtung der Bedienungsperson zur Anzeige gebracht. Auf diese Weise erhält die Bedienungsperson eine Anzeige der für die betreffenden Meßwertstelle wichtigen Daten. Beim nachfolgenden Abrufen der Istwert-Meßwertdaten durch Aktivierung der Meßwertsonde erfolgt aufgrund der Betätigung des Betriebsmeßschalters die Steuerung des Mikroprozessors durch das Meßdatenprogramm. Die automatische Umschaltung vom Kennungs Lesebetrieb in den Meßgrößen-Lese- und -auswertebetrieb bedeutet für den Mikroprozessor eine große Verbesserung der Sicherheit und der Arbeitsgeschwindigkeit. Die im Meßdatenpro-grammzyklus abgerufenen Meßgrößen der Meß-stelle werden als Daten zusammen mit den Sollwertdaten der Meßwertstelle verarbeitet und dann der Bedienungsperson in der Anzeigeeinrichtung angezeigt. Die endgültige Abspeicherung der Daten erfolgt zweckmäßigerweise in der zentralen Datenverarbeitungsanlage, in der die gesamten Daten abgelegt werden. So kann in vorteilhafter Weise datenmäßig der Lebenslauf einer Maschine festgehalten werden.

Im folgenden wird die Erfindung anhand von in den Figuren dargestellten Ausführungsbeispielen beschrieben. Es zeigen:

Fig. 1 eine perspektivische Darstellung eines Maschinenteiles mit einer Meßeinheit,

Fig. 2 ein tragbares Meßgerät mit einem Anzeigefeld,

Fig. 3 eine Meßsonde einer Meßeinheit für die Abtastung von Kennungen und Meßgrößen,

Fig. 4 einen Schnitt durch die Meßsonde nach Fig. 3,

Fig. 5 eine schematische Darstellung der Auswerteschaltung,

Fig. 6 einen Querschnitt durch ein Datenübertragungsteil mit einem aufgesetzten Meßkopf einer Meßeinheit mit fest angeordnetem Abtastfühler,

Fig. 7 einen Teilquerschnitt durch ein Meßgrößen-Übertragungsteil mit aufgesetztem Meßkopf und beweglichem Fühler,

Fig. 8 einen Teilschnitt durch ein Meßgrößen-Übertragungsteil mit aufgesetztem Meßkopf mit mechanischer Kennungs-Abtastung,

Fig. 9 und 9a ein Meßgrößen-Übertragungsteil mit einem Magnetschichtträger als Kennungsträger,

Fig. 10 und 10a ein Meßgrößen-Übertragungsteil mit auf einem Aufnahmestift angeordneten Magnetringen und Distanzringen zur Kodierung,

Fig. 11 ein Meßgrößen-Übertragungsteil mit eingelegten Permanentmagneten, und

Fig. 12 ein Meßgrößen-Übertragungsteil mit optischen Strichkodierungen.

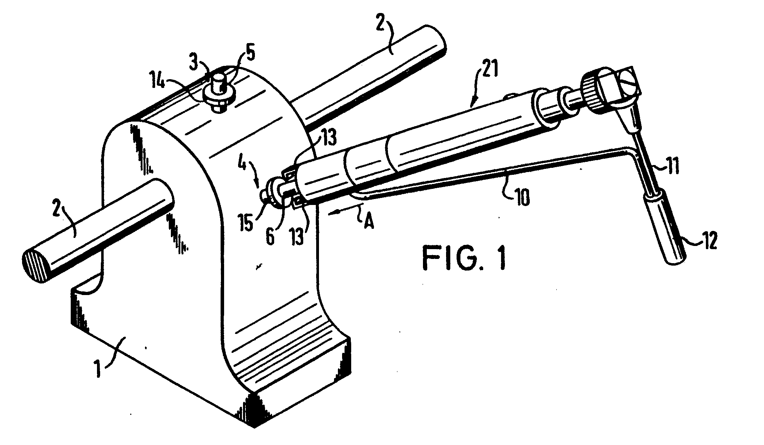

Gemäß Fig. 1 ist mit 1 eine zu untersuchende Maschine bezeichnet, welche ein Lager für eine Welle 2 aufweist. Im Gehäuse befindet sich in nicht dargestellter Weise das zur Welle 2 gehörende Lager.

Am Gehäuse sind zwei Meßstellen 3 und 4 vorgesehen. Mit 5 und 6 sind zugehörige Meßgrößen-Übertragungsteile bezeichnet, welche in Bohrungen der zugehörigen Meßstellen 3 und 4 eingeschraubt sind.

Mit 21 ist eine Meßeinheit bezeichnet, welche sowohl zum Lesen von Kennungen der Meßstellen 3 und 4 als auch zur Abtastung von Meßgrößen an der betreffenden Meßstelle 3 bzw. 4 dient. Mit 10 ist eine Signalsteuerleitung für die Kennungen bezeichnet, während mit 11 eine weitere Leitung bezeichnet ist, die zur Übertragung von Meßgrößen dient. In nicht dargestellter Weise werden die Meßgrößen mit Hilfe eines akustischen Signalempfängers ermittelt. Die beiden Leitungen 10 und 11 werden in einer gemeinsamen Leitung 12 weitergeführt. Die Meßeinheit weist am stirnseitigen Kopfende greiferartige Elemente auf, die bei aufgesetzter Meßeinheit auf das jeweilige Meßgrößen-Übertragungsteil 5 bzw. 6 einen an diesem vorgesehenen Bund 14 bzw. 15 umgreift. Auf diese Weise wird eine reproduzierbare und damit sichere Meßgrößen- und Kennungsübertragung gewährleistet.

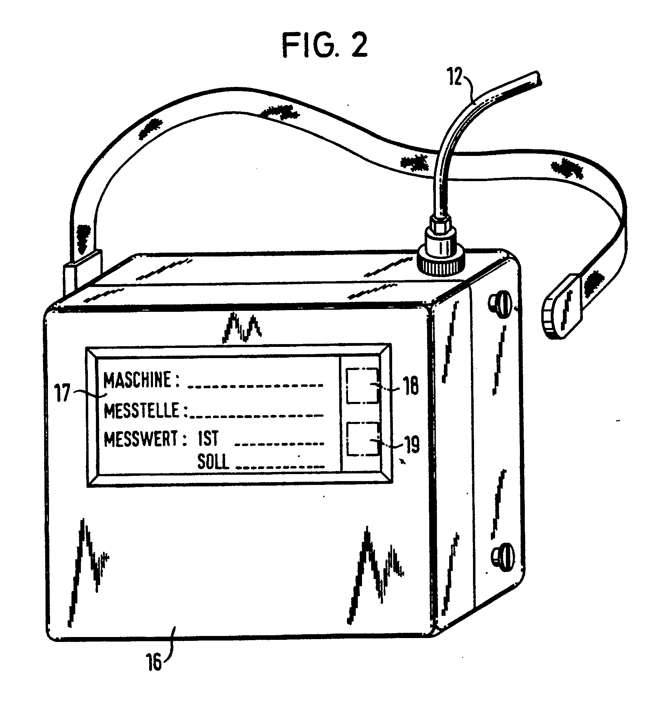

In Fig. 2 führt die gemeinsame Leitung 12 zu einem Meßgerät 16, welches mit einem Anzeigefeld 17 versehen ist. Das Anzeigefeld besteht in nicht dargestellter Weise aus einem Flüssigkristallfeld und ist unterteilt in eine Maschinenanzeige, in eine Meßstellenanzeige und in eine Meßwertanzeige. Die Maschinenanzeige zeigt das zu prüfende Gerät der Bedienungsperson an. Die Meßstellenanzeige gibt die Meßstellennummer am zu untersuchenden Gerät wieder. Die Meßwertanzeige gibt einerseits den Sollwert und andererseits den Istwert an der betreffenden Meßstelle wieder. Zwei Teilanzeigefelder 18 und 19 dienen zur JA/NEIN-Anzeige der Meßoperation. Der Bedienungsperson wird im betreffenden Anzeigefeld angezeigt, ob die Messung in Ordnung ist oder nicht.

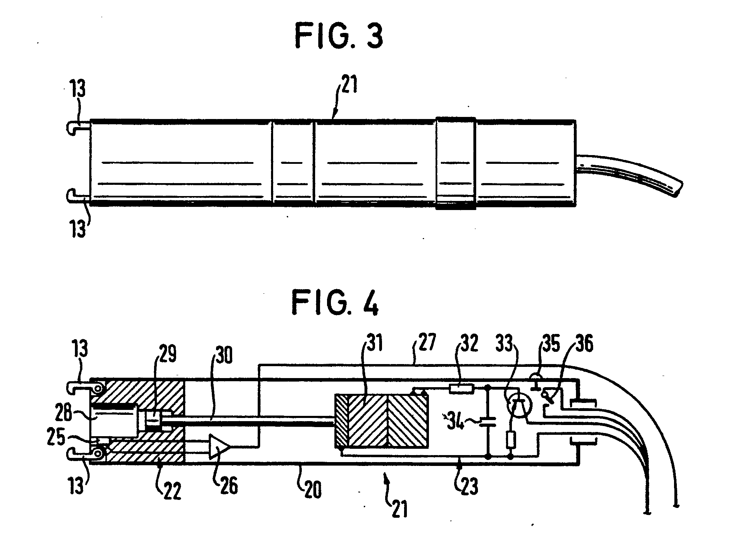

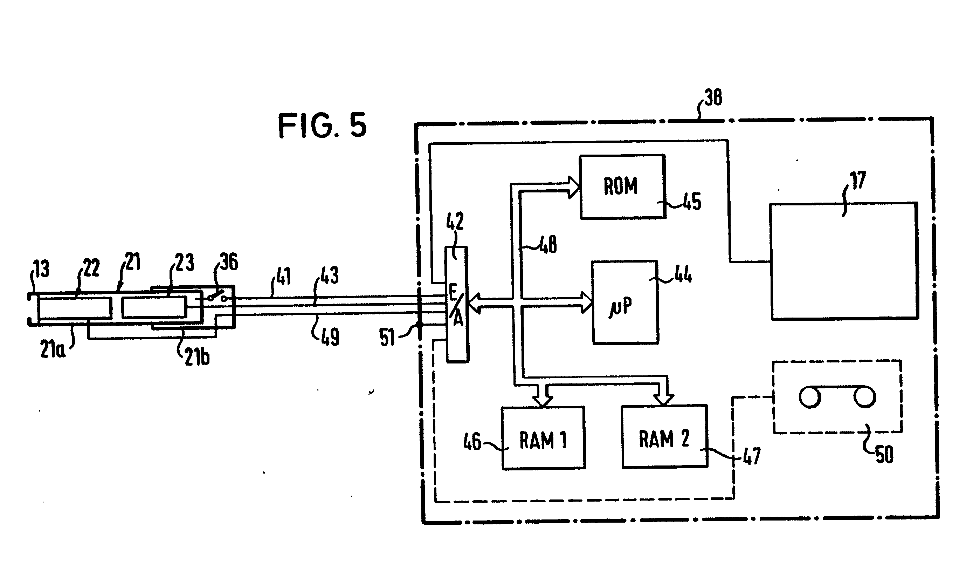

Gemäß den Fig. 3 und 4 ist innerhalb der Meßeinheit 21 sowohl eine Meßstellen-Kennungs-Sonde 22 als auch eine Meßgrößen-Sonde 23 vorgesehen. Das gemeinsame Meßeinheit gehäuse ist mit 20 bezeichnet. Die Kennungs-Sonde weist eine Kennungs-Abtasteinheit 25 und einen Verstärker 26 auf. Die zugehörige Datenübertragungsleitung ist mit 27 bezeichnet. Am Meßkopfende der Meßeinheit ist ein Meßraum 28 vorgesehen, welcher stirnseitig geöffnet ist. Mit 29 ist ein Meßgrößen-Empfangsteil bezeichnet, welches über einen Steg 30 mit einem akustischen Stoßsignal-Empfangselement 31 verbunden ist. An das akustische Stoßsignal-Empfangselement 31 sind zwei Leitungen angeschlossen, von denen die eine über einen Widerstand 32 mit der Basis eines Transistors 33 verbunden ist. Mit 34 ist ein Kondensator bezeichnet. Die Kollektorleitung des Transistors 33 sowie die zweite Anstoßleitung des akustischen Stoßsignal-Empfangselementes 31 führen zu dem Kabel 11.

Mit 35 ist ein Druckknopf oder Tastelement bezeichnet, durch welches ein Schalter 36 betätigbar ist. Dieser Schalter 36 dient zur Umschaltung der Meßeinheit vom Lesebetrieb in den Meßgrößen-Ermittlungsbetrieb.

Gemäß Fig. 5 ist die einteilige Meßeinheit 21 mit einer Auswerteschaltung 38 verbunden, welche in dem Meßgerät 16 von Fig. 2 untergebracht ist. In Fig. 5 sind die den Teilen von Fig. 4 entsprechenden Teile mit gleichen Bezugszeichen versehen. Das Gehäuse 21 der Meßeinheit ist zweiteilig ausgebildet und besteht aus einem ersten zylindrischen Frontgehäuseteil 21a sowie aus einem hinteren Gehäuseteil 21b, das das frontseitige Gehäuseteil 21a überlappt. Der mit 36 bezeichnete Betriebsumschalter wird betätigt, wenn die Meßeinheit 21 gegen das jeweilige Meßgrößen-Übertragungsteil 5 bzw. 6 der Meßstelle 3 bzw. 4 gedrückt wird, wobei beide Gehäuseteile um einen bestimmten Betrag teleskopartig ineinander geschoben werden. Bei dieser teleskopartigen Schiebephase wird der genannte Betriebsmeßschalter automatisch betätigt.

Gemäß einer anderen Möglichkeit wird der Betriebsumschalter automatisch dann betätigt, wenn die Greifer 13 den jeweiligen Bund des Meßgrößen-Übertragungsteiles umgreifen oder aber wenn ein Fühlstift durch den Bund 14 bzw. 15 verschoben wird.

Die Auswerteschaltung enthält einen Mikroprozessor 44, einen Festwertspeicher 45 zur Abspeicherung von Programmablaufdaten, einen ersten Schreib- und Lesespeicher 46 sowie einen zweiten Schreib- und Lesespeicher 47. Die genannten Schaltungsstufen sind über einen Sammeldatenbus 48 miteinander verbunden. Der Schreib- und Lesespeicher 46 ist dem Kennungs-Lese- und -auswertebetrieb zugeordnet, während der Schreibund Lesespeicher 47 den Daten für die Meßwerterfassung an den Meßstellen zugeordnet ist. Im Festwertspeicher 45 sind die Programmdaten sowohl für den Lesebetrieb als auch für den Meßgrößen-Erfassungs- und -auswertebetrieb gespeichert. Die Ein- und Ausgabeeinheit 42 ist mit dem Anzeigefeld 17 verbunden.

Die Ein- und Ausgabeeinheit 42 ist darüber hinaus mit einer Einheit 50 verbindbar, welche eine Magnetspeichereinrichtung verkörpert. Mit 51 ist ein Anschluß bezeichnet, über den die gespeicherten Daten einer nicht dargestellten zentralen Datenverarbeitungsanlage zur Weiterverarbeitung zugeführt werden, wo sie stets zum Abruf bereitstehen.

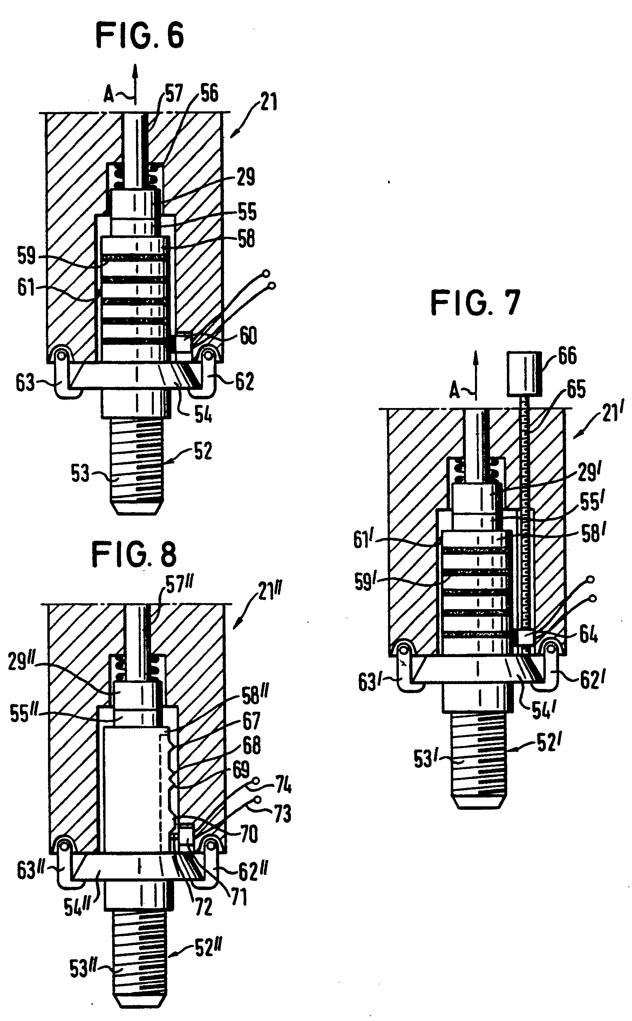

Gemäß Fig. 6 ist ein Meßgrößen-Übertragungsteil 52 vorgesehen, welches an seinem freien Ende mit einem Gewinde 53 versehen ist und in eine entsprechende Bohrung der Meßstelle 3 bzw. 4 der Maschine eingeschraubt wird. Ein Bund ist mit 54 bezeichnet. Oberhalb des Bundes befindet sich ein Meßgrößen-Übertragungsstift 55, der an seinem Ende mit dem Meßsignalaufnahmeteil 29 der Meßeinheit 21 in Berührung steht. Mit 56 ist eine Druckfeder bezeichnet, während mit 57 ein Übertragungssteg bezeichnet ist. Die Druckfeder 56 erlaubt eine Relativbewegung des Meßgrößen-Aufnahmeteiles 29 in Pfeilrichtung A.

Auf dem Meßgrößen-Übertragungsstift 55 ist ein Kennungsträger 58 vorgesehen, welcher im vorliegenden Falle mit optischen oder magnetischen ringartigen Kennungen 59 versehen ist. Die Meßeinheit 21 weist im Bereich des Kopfendes einen Meßraum 61 auf, welcher am stirnseitigen Ende einen Kennungs-Abtastfühler 60 enthält. Klinkenartige Stifte, die am Ende des Meßkopfes der Meßeinheit 21 vorgesehen sind, sind mit 62 und 63 bezeichnet. In nicht dargestellter Weise sind diese Greifer federnd gelagert.

Beim Ausführungsbeispiel gemäß Fig. 7 sind die den Teilen von Fig. 6 entsprechenden Teile mit gleichen Bezugszeichen versehen. Zur Unterscheidung weisen sie jedoch Indizes auf.

Mit 64 ist eine in Pfeilrichtung A und entgegengesetzt hierzu bewegliche Kennungs-Abtasteinheit bezeichnet, welches auf einer Spindel 65 geführt ist, die durch einen Elektromotor 66 in Drehung versetzt wird. Bei Drehung der Spindel 65 wird die Kennungs-Abtasteinheit in Pfeilrichtung A bewegt.

In Fig. 8 sind die den Teilen gemäß Fig. 6 entsprechenden Teile mit gleichen Bezugszeichen versehen. Zur Unterscheidung weisen sie jedoch Indizes auf. Im Unterschied zu den vorhergehenden Figuren 6 und 7 weist der Kennungsträger 58" mechanische Kodierungen in Form von Ansätzen 67, 68, 69 und 70 auf. Als Kennungs-Abtastelement dient ein Mikroschalter 71, der mit einem Abtaststift 72 versehen ist. Beim Aufsetzen des Meßkopfes der Meßeinheit 21" auf das Meßstellen-Übertragungsteil 52" werden die mechanischen Kennungen bzw. Kodierungsansätze automatisch abgetastet. Der Mikroschalter 71 gibt automatisch über seine Anschlußleitungen 73 und 74 entsprechende Kennungs-Impulse ab.

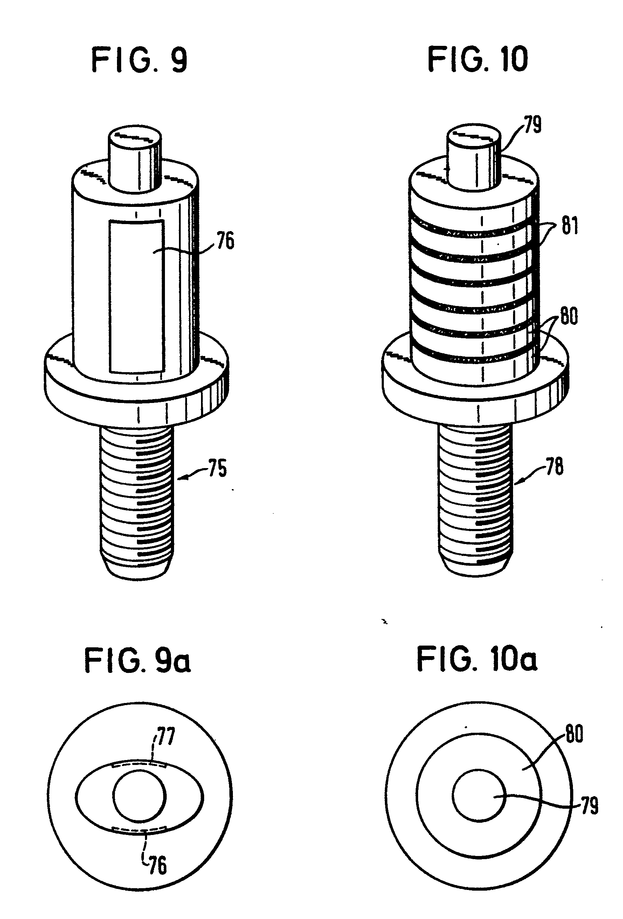

In der Ausführungsform von Fig. 9 und 9a ist ein Meßstellen-Übertragungsteil 75 ähnlich ausgebildet wie in den vorhergehenden Figuren. Im Unterschied zu diesen besteht der Kennungsträger aus einer Magnetfolie oder dergleichen 76 und 77. Der Kennungsträger ist insgesamt elliptisch ausgebildet. Gleiches gilt für den Meßraum des Meßkopfes der Meßeinheit 21. Auf diese Weise wird sichergestellt, daß bei Abtastung der Kennungen die Kennungs-Abtasteinheit mit dem Kennungsträger korrespondiert (Verdrehschutz).

Im Ausführungsbeispiel gemäß den Fig. 10 und 10a weist ein Meßgrößen-Übertragungsteil 78 auf der Meßgrößen-Übertragungsseite einen Meßgrößen-Übertragungsstift 79 auf, auf dem lösbar abwechselnd Distanzringe 80 und magnetische oder optische Kennungsringe angeordnet sind. Diese Ausführungsform weist den Vorteil auf, daß die maschinenseitigen Kennungen in einfacher Weise und individuell kombiniert werden können.

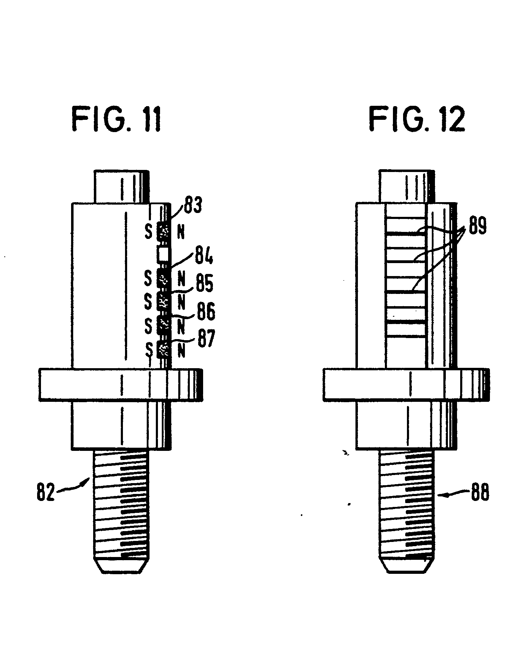

Im Ausführungsbeispiel gemäß Fig. 11 weist ein Meßgrößen-Übertragungsteil 82 eingelagerte Permanentmagnete 83, 84, 85, 86 und 87 auf. Durch Wechsel der Polrichtung bei dem Einlegen der Permanentmagnete kann unterschieden werden zwischen einer Nord-Süd- und einer Süd-Nordrichtung. Solche permanentmagnetischen Kennungen und Kodierungen lassen sich in einfacher Weise über Induktionsabtastelemente auswerten.

Beim Ausführungsbeispiel gemäß Fig. 12 weist ein Meßgrößen-Übertragungsteil 88 optische Strichkodierungen 89 auf, die in einfacher Weise durch einen optischen Abtaster im Meßraum des Meßkopfes der Meßeinheit 21 abgetastet werden können.

Gemäß den Fig. 6 und 7 gibt es grundsätzlich zwei Möglichkeiten zur Erfassung der Kennungen.

Die erste Möglichkeit der Kennungserfassung, die auch für die Ausführungsbeispiele der Fig. 8, 9, 10, 11 und 12 gilt, besteht darin, daß beim Ansetzen des Meßkopfes der Meßeinheit auf das Meßgrößen-Übertragungsteil automatisch der stirnseitig vorgesehene Kennungsabtaster an den Kodierungen und Kennungen entlang bewegt wird und hierbei elektrische Signale in Form von Impulsen abgibt, die über die Signalleitung 27 von Fig. 4 zur Auswertung weitergeleitet werden. Ist das Meßkopfende auf das Meßgrößen-Übertragungsteil aufgesetzt, so greifen die Greifer um den entsprechenden Bund am Meßgrößen-Übertragungsteil. Hierdurch ist die Meßeinheit mit ihrem Meßkopf am Meßgrößen-Übertragungsteil gesichert. Desgleichen ist das Meßgrößen-Empfangsteil 29 bündig mit dem Meßgrößen-Übertragungsstift 55 gekoppelt. Somit können in einfacher Weise im Anschluß an die Kennungserfassung die Meßgrößen in Form von Daten zur Auswertung übertragen werden.

Bei der zweiten Möglichkeit nach Fig. 7 wird der Meßkopf auf das Meßgrößen-Übertragungsteil aufgesetzt und durch die Greifer 63' und 62' am Bund 54' gesichert. Im Anschluß daran erfolgt aufgrund eines Steuerbefehles die Abtastung der Kennungen durch Einschaltung des Motors 66. Hierbei wird im Zuge der Drehung der Spindel 65 das Kennungs-Abtastteil 64 in Pfeilrichtung A bewegt, wodurch die Kennungskodierungen 59' abgetastet werden. Die Umschaltung vom Kennungserfassungsbetrieb auf den Meßgrößenabtast- und -auswertebetrieb erfolgt mit Hilfe des Schalters 36 in Fig. 4.

Bei der Ausführungsform von Fig. 6 hat der Betriebsschalter 36 lediglich eine Einschaltfunktion für die Übertragung der Meßdaten in die Auswerteschaltung.

Den Kennungen und Meßgrößen entsprechende digitale Kennungsdaten und Meßdaten gelangen zur Ein- und Ausgabeschnittstelle 42. Von dort werden sie in den zugeordneten Schreib- und Lesespeicher 46 übertragen und dann unter Mitwirkung des entsprechenden Ablaufprogrammes für den Lesebetrieb durch den Mikroprozessor 44 verarbeitet und abgespeichert. Dies bedeutet, daß die durch die entsprechende Kodierung festgehaltenen bzw. gespeicherten, meßstellen-spezifischen Daten im Schreib- und Lesespeicher 46 abgespeichert sind. Die Meßeinheit wird an die zugeordnete Meßstelle geführt und angesetzt und nach Abtastung der Kennungen der Schalter 36 betätigt. Mit Schließen des Betriebsmeßschalters 36 wird aus dem Festwertspeicher 45 das Meßwertabtastprogramm abgerufen, welches an die Stelle des Kennungs-Leseprogrammes tritt. Hierbei wird die akustische Signalempfangseinheit 31 aktiviert. Die gemessenen Meßwerte werden über die Eingabe- und Ausgabeschnittstelle 42 dem Mikroprozessor 44 und dem zugeordneten Schreib- und Lesespeicher zugeführt. Sodann erfolgt eine vergleichende Operation zwischen Ist- und Sollwerten. Das Ergebnis wird in nicht dargestellter Weise im Anzeigefeld angezeigt. Im Anzeigefeld wird wie bereits eingangs erwähnt darüber hinaus angezeigt, um welches Maschinenteil und um welche Meßstelle es sich jeweils handelt.

Die einzelnen erfaßten Daten werden am Ende einer Meßroutine auf die zentrale Datenverarbeitungsanlage übertragen.

## Patentansprüche

1. Verfahren zur Ermittlung und Auswertung von Zustandsgrößen an mit Meßstellen (3,4) versehenen Maschinen (1), wobei eine Meßgrößen-Sonde (23) an die betreffende Meßstelle angesetzt wird und wobei die abgetasteten Meßgrößen als Daten in eine Auswerteschaltung (38)- mit Speicher übertragen und dort verarbeitet werden, wobei mittels einer Meßstellenkennungs-Abtastsonde (22) eine an jeder Meßstelle (3,4) vorgesehene Meßstellenkennung (59) abgetastet wird, wobei die jeweils abgetastete Meßstellenkennung zur Adaptierung der Auswerteschaltung (38) an die betreffende Meßstelle der Maschine als Kennungsdaten in den Speicher der Auswerteschaltung übertragen wird, und wobei die Meßgrößen-Sonde (23) und die Meßstellenkennungs-Abtastsonde (22) in einem gemeinsamen mobilen Gehäuse (20) untergebracht sind und eine Meßeinheit bilden, dadurch **gekennzeichnet,** daß die jeweilige Meßstellenkennung (59) einer Meßstelle (3 bzw. 4) beim Ansetzen der Meßeinheit (21) an ein entsprechendes Meßgrößen-Übertragungsteil (5 bzw. 6) der Meßstelle (3 bzw. 4) oder danach und die zugehörigen Meßgrößen nach dem Verbinden des Meßgrößen-Übertragungsteils (5 bzw. 6) mit der Meßeinheit (21) zum Zwecke ihrer Übertragung in die Auswerteschaltung (38) automatisch abgetastet werden.

2. Verfahren nach Anspruch 1, dadurch **gekennzeichnet,** daß mittels der Meßstellenkennungs-Abtastsonde optische oder kapazitive oder magnetische oder induktive oder mechanische Kennungen abgetastet werden.

3. Verfahren nach Anspruch 1 oder 2, dadurch **gekennzeichnet,** daß die Verarbeitung der Meßgrößen und der Kennungen in Form von Daten in einem tragbaren oder stationären Meßgerät erfolgt.

4. Verfahren nach Anspruch 3, dadurch **gekennzeichnet,** daß eine Weiterverarbeitung und Abspeicherung der Meßgrößen und Kennungsdaten in einer zentralen Verarbeitungsvorrichtung, insbesondere in einer zentralen Datenverarbeitungsanlage erfolgt.

5. Meßgerät zur Durchführung des Verfahrens nach einem der Ansprüche 1 bis 4, mit einer Meßgrößen-Sonde (23), enthaltend einen Meßgrößen-Empfänger und eine Auswerteschaltung (38) mit Speicher zur Aufnahme und Auswertung der von der betreffenden Meßstelle (3,4) her übertragenen, den Meßgrößen entsprechenden Daten und mit einer Meßstellenkennungs-Abtastsonde (22) mit einer Abtasteinheit zum Abtasten einer Meßstellenkennung (59), wobei der Speicher meßstellenspezifische Speicherplätze aufweist, die durch die entsprechenden Daten der Kennung der Meßstelle aktivierbar sind, wobei die Meßgrößen-Sonde (23) und die Meßstellenkennungs-Abtastsonde (22) in einem gemeinsamen Gehäuse (20) vorgesehen sind und eine Meßeinheit (21) bilden, dadurch **gekennzeichnet,** daß im gemeinsamen Gehäuse (20) der Meßeinheit ein zum maschinenseitigen Kopfende derselben hin geöffneter Meßraum (28; 61) für ein maschinenseitiges Meßgrößen-Übertragungsteil (52) vorgesehen ist, das außerdem Träger der meßstellenspezifischen Kennungen ist, und daß die Meßstellenkennungs-Abtasteinheit (60) in Ansetzrichtung der Meßeinheit (21) gesehen seitlich im Meßraum (28; 61) angeordnet und an den Kennungen des Kennungsträgers entlang bewegbar ist.

6. Meßgerät nach Anspruch 5, dadurch **gekennzeichnet,** daß der Meßgrößen-Empfänger (29) am Boden des Meßraumes (28; 61) angeordnet ist und daß die Kennungs-Abtasteinheit (60) am seitlichen Kopfende des Meßraumes (28; 61) fest angebracht ist, so daß sie beim Aufsetzen der Meßeinheit auf das Meßgrößen-Übertragungsteil (52) an den Kennungen automatisch entlang bewegt wird.

7. Meßgerät nach Anspruch 5,
dadurch **gekennzeichnet**, daß die Kennungs-Abtasteinheit (64) beweglich im Meßraum (61') gelagert und durch ein Antriebsmittel (65, 66) bei auf das Meßgrößen-Übertragungsteil (52') aufgesetztem Kopf der Meßeinheit an den Kennungen entlang bewegbar ist.

8. Meßgerät nach einem der Ansprüche 5 bis 7,
dadurch **gekennzeichnet**, daß das Kopfende der Meßeinheit mit Befestigungsteilen (62, 63) versehen ist, die den aufgesetzten Kopf am Meßgrößen-Übertragungsteil (52) sichern.

9. Meßgerät nach Anspruch 8,
dadurch **gekennzeichnet**, daß die Befestigungsteile federnde klinkenartig ausgebildete Hebel sind, die im aufgesetzten Zustand des Kopfes der Meßeinheit automatisch einen Halteteil des Meßgrößen-Übertragungsteils umgreifen.

10. Meßgerät nach einem der Ansprüche 5 bis 9,
dadurch **gekennzeichnet**, daß die Meßstellenkennung-Abtastsonde als digital arbeitende optische Sonde mit einer Strahlungsquelle, einem strahlungsempfindlichen Empfänger und einer digitalen Signalverarbeitungsschaltung zum Lesen einer optischer Kennung ausgebildet ist.

11. Meßgerät nach einem der Ansprüche 5 bis 9,
dadurch **gekennzeichnet**, · daß die Meßstellenkennung-Abtastsonde als Kapazitätssonde zum Lesen einer kapazitiven Kennung ausgebildet ist.

12. Meßgerät nach einem der Ansprüche 5 bis 9,
dadurch **gekennzeichnet**, daß die Meßstellenkennungs-Abtastsonde als Magnetlesekopf zum Lesen einer magnetischen Kennung ausgebildet ist.

13. Meßgerät nach einem der Ansprüche 5 bis 9,
dadurch **gekennzeichnet**, daß die Meßstellenkennungs-Abtastsonde als Induktionslesekopf zum Lesen einer induktiven Kennung ausgebildet ist.

14. Meßgerät nach einem der Ansprüche 5 bis 9,
dadurch **gekennzeichnet**, daß die Meßstellenkennungs-Abtastsonde als Abtaster mit einer Impulsgeberschaltung zum Abtasten von mechanischen oder elektrischen Kodierungen ausgebildet ist.

15. Meßgerät nach einem der Ansprüche 5 bis 14,
dadurch **gekennzeichnet**, daß der Meßgrößen-Empfänger im Meßraum in Ansetzrichtung des Kopfes der Meßeinheit gesehen federnd gelagert ist.

16. Meßgerät nach einem der Ansprüche 5 bis 15,
dadurch **gekennzeichnet**, daß ein Betriebsschalter vorgesehen ist, durch den bei angesetztem Kopf der Meßeinheit sowohl die Meßgrößen-Sonde als auch die Meßstellenkennungs-Sonde betriebswirksam schaltbar ist.

17. Meßgerät nach Anspruch 16,
dadurch **gekennzeichnet**, daß die Umschaltung vom Meßstellenkennungs-Abtastschritt auf den Meßgrößen-Übertragungsschritt mittels eines Druckschalters automatisch beim Fixieren des Kopfes der Meßeinheit am Meßgrößen-Übertragungsteil erfolgt.

18. Meßgerät nach Anspruch 16,
dadurch **gekennzeichnet**, daß die Umschaltung vom Meßstellenkennungs-Abtastschritt auf den Meßgrößen-Übertragungsschritt durch eine Folgesteuerschaltung erfolgt, die beim Ansetzen der Meßeinheit auf den Meßgrößen-Übertragungsteil aktiviert wird.

19. Meßgerät nach einem der Ansprüche 5 bis 18,
dadurch **gekennzeichnet**, daß der Betriebsschalter als Druckoder Teleskopschalter ausgebildet ist und durch teleskopartiges Ineinanderschieben zweier Gehäuseteile der Meßeinheit betätigbar ist.

20. Meßgerät nach einem der Ansprüche 5 bis 19,
dadurch **gekennzeichnet**, daß die Meßdatensonde einen akustischen Signalempfänger, insbesondere einen Stoßsignal-Empfänger, sowie eine A/D-Wandlerschaltung aufweist.

21. Meßgerät nach einem der Ansprüche 5 bis 20,
dadurch **gekennzeichnet**, daß die Auswerteschaltung einen Mikrocomputer mit Speicher aufweist und tragbaren Meßgerätes Bestandteil eines ist, das einen Anschluß aufweist, über den die Übertragung der den Kennung und die Meßgrößen entsprechenden Daten in eine zentrale Datenverarbeitungsanlage erfolgt.

22. Meßgrößen-Übertragungsteil zur Durchführung des Verfahrens nach einem der Ansprüche 1 bis 4,
dadurch **gekennzeichnet**, daß der Meßgrößen-Übertragungsteil einen Meßstellenkennungs-Träger aufweist, daß das Meßgrößen-Übertragungsteil als Adapter ausgebildet ist, welcher mit einem Meßempfängerteil zur Einbringung in eine Meßstelle einer Maschine versehen ist und welcher außerdem am anderen Ende mit einem Signalgeberteil für die Meßgrößen versehen ist, und daß der Kennungsträger als optischer oder kapazitiver oder induktiver oder magnetischer oder mechanischer Träger von digitaler Meßstellen-Kennung in Form von strich- oder balkenkodierten Kennungselementen oder von kapazitiven Kennungselementen oder von induktiven Kennungselementen oder von mechanischen Kennungselementen oder als magnetischer Speicher oder als lesbarer Festwertspeicher ausgebildet ist.

## Claims

1. Method for the detection and evaluation of data representative of the condition of machines (1) provided with measuring points (3, 4), wherein a measurand probe (23) is applied to the respective measuring point and wherein the sensed measurands are transmitted as data to an evaluation circuit (38) with memory and there processed, wherein by means of a measuring point code sensing probe (22), a measuring point code (59) provided at each measuring point (3, 4) is sensed, wherein the respectively sensed measuring point code is transmitted to the memory of the evaluation circuit as code data in order to adapt the evaluation circuit (38) to the respective measuring point of the machine, and wherein the measurand probe (23) and the measuring point code sensing probe (22) are accommodated in a common mobile housing (20) and form a measuring unit, characterised in that the respective measuring point code (59) of a measuring point (3 or 4) on application of the measuring unit (21) to a corresponding measurand transmitting portion (5 or 6) of the measuring point (3 or 4) or thereafter and the associated measurands after connection of the measurand transmitting portion (5 or 6) to the measuring unit (21) are sensed automatically for the purpose of transmitting them to the evaluation circuit (38).

2. Method according to claim 1, characterised in that by means of the measuring point code sensing probe, optical or capacitive or magnetic or inductive or mechanical codes are sensed.

3. Method according to claim 1 or 2, characterised in that processing of the measurands and codes in the form of data is carried out in a portable or stationary measuring instrument.

4. Method according to claim 3, characterised in that further processing and storage of the measurand data and code data is carried out in a central processing apparatus, particularly in a central data processing system.

5. Measuring instrument for carrying out the method according to any of claims 1 to 4, with a measurand probe (23) comprising a measurand receiver and an evaluation circuit (38) with memory for picking up and evaluating the data corresponding to the measurands and transmitted from the respective measuring point (3, 4), and with a measuring point code sensing probe (22) with a sensing unit for sensing a measuring point code (59), wherein the memory comprises storage locations specific to the measuring points, which can be activated by the corresponding code data of the measuring point, wherein the measurand probe (23) and the measuring point code sensing probe (22) are provided in a common housing (20) and form a measuring unit (21), characterised in that in the common housing (20) of the measuring unit is provided a measuring chamber (28; 61) opening towards the head end of the measuring unit on the machine side, for a measurand transmitting portion (52) on the machine side which is also a carrier for the codes specific to the measuring points, and that the measuring point code sensing unit (60) is arranged at the side of the measuring chamber (28; 61), viewed in the direction of applying the measuring unit (21), and is movable along the codes of the code carrier.

6. Measuring instrument according to claim 5, characterised in that the measurand receiver (29) is arranged at the bottom of the measuring chamber (28; 61) and that the code sensing unit (60) is stationarily arranged at the lateral head end of the measuring chamber (28; 61), so that it is moved along the codes automatically when the measuring unit is applied to the measurand transmitting portion (52).

7. Measuring instrument according to claim 5, characterised in that the code sensing unit (64) is mounted movably in the measuring chamber (61') and is movable along the codes by a drive means (65, 66) when the head of the measuring unit has been applied to the measurand transmitting portion (52').

8. Measuring instrument according to any of claims 5 to 7, characterised in that the head end of the measuring unit is provided with fastening means (62, 63) which secure the applied head to the measurand transmitting portion (52).

9. Measuring instrument according to claim 8, characterised in that the fastening means are resilient, latch-type levers which automatically encompass a retaining means on the measurand transmitting portion when the head of the measuring unit is set in place.

10. Measuring instrument according to any of claims 5 to 9, characterised in that the measuring point code sensing probe is constructed as a digitally operating optical probe with a radiation source, a radiation-sensitive receiver and a digital signal processing circuit for reading an optical code.

11. Measuring instrument according to any of claims 5 to 9, characterised in that the measuring point code sensing probe is constructed as a capacitive probe for reading a capacitive code.

12. Measuring instrument according to any of claims 5 to 9, characterised in that the measuring point code sensing probe is constructed as a magnetic reading head for reading a magnetic code.

13. Measuring instrument according to any of claims 5 to 9, characterised in that the measuring point code sensing probe is constructed as an induction reading head for reading an inductive code.

14. Measuring instrument according to any of claims 5 to 9, characterised in that the measuring point code sensing probe is constructed as a sensor having a pulse generator circuit for sensing mechanical or electrical codes.

15. Measuring instrument according to any of claims 5 to 14, characterised in that the measurand receiver is mounted resiliently in the measuring chamber for sprung movement in the direction of applying the head of the measuring unit.

16. Measuring instrument according to any of claims 5 to 15, characterised in that a mode switch is provided, by means of which, with the head of the measuring unit in place, both the measurand probe and the measuring point code probe can be switched into effective operation.

17. Measuring instrument according to claim 16, characterised in that switching from the measuring point code sensing step to the measurand transmitting step is carried out by means of a pressure switch automatically when the head of the measuring unit is fixed to the measurand transmitting portion.

18. Measuring instrument according to claim 16, characterised in that switching from the measuring point code sensing step to the measurand transmitting step is carried out by a sequential control circuit which is activated when the measuring unit is applied to the measurand transmitting portion.

19. Measuring instrument according to any of claims 5 to 18, characterised in that the mode switch is constructed as a pressure switch or telescopic switch and can be activated by telescoping two parts of the housing of the measuring unit together.

20. Measuring instrument according to any of claims 5 to 19, characterised in that the test data probe comprises an acoustic signal receiver, particularly a shock signal receiver, as well as an analogue-to-digital converter circuit.

21. Measuring instrument according to any of claims 5 to 20, characterised in that the evaluation circuit comprises a microcomputer with memory and forms part of a portable measuring instrument which comprises a terminal via which transmission of the data corresponding to the codes and measurands to a central data processing system is carried out.

22. Measurand transmitting portion for carrying out the method according to any of claims 1 to 4, characterised in that the measurand transmitting portion comprises a measuring point code carrier, that the measurand transmitting portion is constructed as an adapter which is provided with a measuring receiver portion for insertion in a measuring point of a machine and which moreover is provided at the other end with a signal generator portion for the measurands, and that the code carrier is constructed as an optical or capacitive or inductive or magnetic or mechanical carrier of digital measuring point codes in the form of bar code elements or capacitive code elements or inductive code elements or mechanical code elements or as a magnetic memory or as a read-only memory.

## Revendications

1. Procédé pour déterminer et exploiter des paramètres d'état sur des machines (1) pourvues de points de mesure (3, 4), selon lequel une sonde (23) de grandeurs mesurées est appliquée contre un point de mesure donné et les grandeurs mesurées, relevées par la sonde, sont transmises sous forme de données à un circuit d'exploitation (38) possédant une mémoire et y sont traitées, selon lequel un identificatif de point de mesure (59), prévu à chaque point de mesure (3, 4), est relevé au moyen d'une sonde (22) de relevé d'identificatifs de points de mesure, selon lequel l'identificatif de point de mesure relevé est transmis sous forme de données d'identification dans la mémoire du circuit d'exploitation, en vue de l'adaptation du circuit d'exploitation (38) au point de mesure concerné de la machine, et selon lequel la sonde (23) pour les grandeurs mesurées et la sonde (22) pour relever les identificatifs des points de mesure sont logées dans un boîtier mobile (20) commun et constituent une unité de mesure, caractérisé en ce que l'identificatif (59) d'un point de mesure (3 ou 4) est relevé automatiquement lors de l'application de l'unité de mesure (21) contre une pièce (5 ou 6) de transmission des grandeurs mesurées du point de mesure (3 ou 4), ou à la suite de cette application, et les grandeurs mesurées correspondantes sont relevées automatiquement, après la liaison de la pièce (5 ou 6) de transmission des grandeurs mesurées à l'unité de mesure (21), en vue de leur transmission au circuit d'exploitation (38).

2. Procédé selon la revendication 1, caractérisé en ce que la sonde pour le relevé des identificatifs des points de mesure explore des identificatifs optiques, capacitifs, magnétiques, inductifs ou mécaniques.

3. Procédé selon la revendication 1 ou 2, caractérisé en ce que le traitement des grandeurs mesurées et des identificatifs s'effectue sous la forme de données dans un appareil de mesure portatif ou stationnaire.

4. Procédé selon la revendication 3, caractérisé en ce qu'un traitement consécutif et une mémorisation des données correspondant aux grandeurs mesurées et des données d'identification, s'effectuent dans un dispositif central de traitement, en particulier dans une installation centrale de traitement de données.

5. Appareil de mesure pour la mise en oeuvre du procédé selon une des revendications 1 à 4, comprenant une sonde (23) de grandeurs mesurées, contenant un récepteur de grandeurs mesurées et un circuit (38) d'exploitation avec une mémoire pour recevoir et exploiter les données transmises depuis le point de mesure (3, 4) concerné et correspondant aux grandeurs mesurées, de même qu'une sonde (22) pour relever des identificatifs des points de mesure, possédant une unité d'exploration pour explorer un identificatif (59) de point de mesure, la mémoire présentant des emplacements de mémoire spécifiques aux points de mesure, emplacements qui peuvent être activés par les données correspondantes de l'identificatif du point de mesure, la sonde (23) pour les grandeurs mesurées et la sonde (22) pour relever les identificatifs des points de mesure étant prévues dans un boîtier (20) commun et constituant une unité de mesure (21), caractérisé en ce que le boîtier commun (20) de l'unité de mesure possède une chambre de mesure (28; 61) qui est ouverte vers l'extrémité de tête côté machine de cette unité et est destinée à recevoir une pièce (52) de transmission des grandeurs mesurées, pièce qui est prévue sur la machine et qui constitue en outre le support des éléments d'identification formant l'indentificatif spécifique au point de mesure, et que l'unité d'exploration (60) pour les indentificatifs des points de mesure est disposée sur le côté à l'intérieur de la chambre de mesure (28; 61), vu dans la direction d'application de l'unité de mesure (21), et est déplaçable le long des éléments d'identification d'un porte-identificatif.

6. Appareil de mesure selon la revendication 5, caractérisé en ce que le récepteur (29) pour les grandeurs mesurées est disposé sur le fond de la chambre de mesure (28; 61) et que l'unité d'exploration (60) pour les identificatifs est disposée fixe sur le côté à l'extrémité de tête de la chambre de mesure (28; 61), de manière que cette unité soit déplacée automatiquement le long des éléments d'identification lorsque l'unité de mesure est appliquée sur la pièce (52) de transmission des grandeurs mesurées.

7. Appareil de mesure selon la revendication 5, caractérisé en ce que l'unité d'exploration (54) des identificatifs est monté mobile dans la chambre de mesure (61') et est déplaçable le long des éléments d'identification lorsque la tête de l'unité de mesure est appliquée sur la pièce (52') de transmission des grandeurs mesurées.

8. Appareil de mesure selon une des revendications 5 à 7, caractérisé en ce que l'extrémité de tête de l'unité de mesure est pourvue d'éléments de fixation (62, 63) qui, à la mise en place de la tête, fixent cette tête à la pièce (52) de transmission des grandeurs mesurées.

9. Appareil de mesure selon la revendication 8, caractérisé en ce que les éléments de fixation sont des leviers à ressort, réalisés à la façon de cliquets, qui entourent une partie de retenue de la pièce de transmission des grandeurs mesurées lorsque la tête de l'unité de mesure a été appliquée sur cette pièce.

10. Appareil de mesure selon une des revendications 5 à 9, caractérisé en ce que la sonde pour le relevé des identificatifs des points de mesure est réalisée comme une sonde optique de type numérique, possédant une source de rayonnement, un récepteur sensible au rayonnement et un circuit numérique de traitement de signaux pour lire des identificatifs optiques.

11. Appareil de mesure selon une des revendications 5 à 9, caractérisé en ce que la sonde pour relever les identificatifs des points de mesure est réalisée comme une sonde capacitive pour lire des identificatifs capacitifs.

12. Appareil de mesure selon une des revendications 5 à 9, caractérisé en ce que la sonde pour relever les identificatifs des points de mesure est réalisée comme une tête de lecture magnétique pour lire des identificatifs magnétiques.

13. Appareil de mesure selon une des revendications 5 à 9, caractérisé en ce que la sonde pour relever les identificatifs des points de mesure est réalisée comme une tête de lecture à induction pour lire des identificatifs inductifs.

14. Appareil de mesure selon une des revendications 5 à 9, caractérisé en ce que la sonde pour relever les identificatifs des poins de mesure est réalisée comme un palpeur comportant un circuit générateur d'impulsions pour palper des codes mécaniques ou électriques.

15. Appareil de mesure selon une des revendications 5 à 14, caractérisé en ce que le récepteur des grandeurs mesurées est monté élastiquement, dans la direction d'application de la tête de l'unité de mesure, à l'intérieur de la chambre de mesure.

16. Appareil de mesure selon une des revendications 5 à 15, caractérisé en ce qu'il comprend un commutateur de mise en marche par lequel peuvent être rendues actives, lorsque la tête de l'unité de mesure est mise en place, à la fois la sonde pour les grandeurs mesurées et la sonde pour relever les identificatifs des points de mesure.

17. Appareil de mesure selon la revendication 16, caractérisé en ce que la commutation de la phase de relevé de l'identificatif d'un point de mesure à la phase de transmission des grandeurs mesurées, s'effectue automatiquement, au moyen d'un commutateur actionné par pression, au moment de la fixation de la tête de l'unité de mesure sur la pièce de transmission des grandeurs mesurées.

18. Appareil de mesure selon la revendication 16, caractérisé en ce que la commutation de la phase de relevé de l'identificatif du point de mesure à la phase de transmission des grandeurs mesurées, s'effectue au moyen d'un circuit de commande automatique qui est activé à la mise en place de l'unité de mesure sur la pièce de transmission des grandeurs mesurées.

19. Appareil de mesure selon une des revendications 5 à 18, caractérisé en ce que le commutateur de mise en marche est réalisé comme un commutateur actionné par pression ou comme un commutateur télescopique qui peut être actionné par l'emboîtement télescopique de deux parties du boîtier de l'unité de mesure l'une dans l'autre.

20. Appareil de mesure selon une des revendicarions 5 à 19, caractérisé en ce que la sonde pour relever les données de mesure comporte un récepteur de signaux acoustiques, en particulier un récepteur de signaux dus à des chocs, ainsi qu'un circuit de conversion A/N.

21. Appareil de mesure selon une des revendications 5 à 20, caractérisé en ce que le circuit d'exploitation comporte un micro-ordinateur avec une mémoire et fait partie d'un appareil de mesure portatif, lequel présente une connexion pour la transmission des données correspondant à l'identificatif et aux grandeurs mesurées dans une installation centrale de traitement de données.

22. Pièce de transmission de grandeurs mesurées pour la mise en oeuvre du procédé selon une des revendication 1 à 4, caractérisée en ce qu'elle présente un support pour l'identificatif du point de mesure, qu'elle est réalisée comme un adaptateur pourvu d'une partie formant un récepteur de mesure pour la mise en place dans un point de mesure d'une machine et dont l'autre extrémité est en outre pourvue d'une partie d'émission de signaux pour les grandeurs mesurées, et que le support de l'identificatif est réalisé comme un support optique, capacitif, inductif, magnétique ou mécanique d'éléments numériques d'identification d'un point de mesure sous la forme d'éléments d'identification codés en barres, sous la forme d'éléments d'identification capacitifs, inductifs ou mécaniques, comme des mémoires magnétiques ou comme des mémoires mcrtes.

FIG. 1

# FIG. 2

MASCHINE : _____
MESSTELLE : _____
MESSWERT : IST _____
SOLL _____

# FIG. 3

# FIG. 4

# FIG. 5

EP 0 211 212 B1

# FIG. 6

# FIG. 7

# FIG. 8

FIG. 9

FIG. 10

FIG. 9a

FIG. 10a

## FIG. 11

83
S N
84
S N 85
S N 86
S N 87
S N

82

## FIG. 12

89

88